# FASCICULE DE BREVET EUROPEEN

(11) **EP 0 433 126 B1**
(45) Date de publication et mention de la délivrance du brevet: **01.06.1994**
(21) Numéro de dépôt: 90403416.2
(22) Date de dépôt: 30.11.1990
(51) Int. Cl.: E21B 23/00, G01V 1/40, G01V 3/20, G01V 3/26

(54) **Système pour déplacer un dispositif d'exploration non rigide dans un puits dévié ou étroit**
System zum Bewegen einer unstarren Untersuchungsvorrichtung in einem abgelenkten oder engen Bohrloch
System for moving a non rigid exploration device in a deviated or narrow well

(30) Priorité: 05.12.1989 FR 8916170
(43) Date de publication de la demande: 19.06.1991
(73) Titulaire: INSTITUT FRANCAIS DU PETROLE, 92502 Rueil-Malmaison (FR)
(72) Inventeur: Wittrisch, Christian, F-92500 Rueil-Malmaison (FR); Dubois, Jean-Claude, F-95800 Courdimanche (FR)

(56) Documents cités:
- FR-A- 2 547 861
- FR-A- 2 609 105
- FR-A- 2 616 230

## Description

La présente invention concerne un système pour conduire un dispositif d'exploration non rigide dans des puits où sa progression par gravité est difficile.

D'une façon générale, le système selon l'invention convient chaque fois que les forces de frottement sont suffisantes pour empêcher la progression d'un dispositif d'exploration. Ceci peut se produire du fait d'une restriction de la section d'un puits et/ou de son inclinaison notable par rapport à la verticale.

Le système selon l'invention peut servir par exemple à conduire jusque dans des parties horizontales d'un puits, un dispositif d'émission-réception de signaux d'un type quelconque acoustiques, électriques, électromagnétiques etc.

Dans le domaine des ondes acoustiques par exemple la conception d'un système d'émission-réception est différente selon que l'on privilégie une reconnaissance à plus ou moins grande portée des zones de terrain traversées par un puits au moyen d'ondes acoustiques à basse fréquence, dans le but d'étudier les limites d'un réservoir éventuel, ou une étude plus localisée des formations environnant un tel puits.

On sait que les résultats les plus intéressants, quand on emploie des ondes acoustiques à fréquence basse, sont obtenus en éloignant de façon significative les émetteurs et les récepteurs. Ceci peut être réalisé en disposant une source sismique en surface et en déplaçant un ensemble de réception dans une portion de puits déviée à une certaine profondeur sous la surface.

Par le brevet français No. 2 609 105, on connait une méthode pour effectuer des mesures dans une zone de puits fortement inclinée par rapport à la verticale au moyen d'une sonde pour puits contenant des capteurs appropriés et munie d'un ou plusieurs bras escamotables dont l'ouverture permet de la plaquer contre les parois. La sonde est fixée à l'extrémité d'une tige et reliée à celle-ci par des moyens de verrouillage escamotables. Elle est descendue et poussée jusque dans la zone d'action par une colonne tubulaire formée progressivement par interconnexion successive à la première d'une série de tiges supplémentaires. La sonde est reliée à une installation de surface par un câble multi-fonctions. De préférence, l'interconnexion du câble à la sonde est établie quand celle-ci est parvenue à une certaine profondeur. Le câble, muni d'un connecteur femelle enfichable en milieu liquide, est introduit dans la colonne par une fenêtre latérale dans un raccord spécial (side-entry sub). Le connecteur est poussé jusqu'à venir s'enficher sur une prise mâle fixée aux moyens de verrouillage et reliée à la sonde par un câble de liaison. Quand la sonde a été poussée jusque dans la zone d'intervention, on télécommande par le câble l'ouverture des moyens de verrouillage qui l'attachent au bas de la colonne et l'ouverture de ses bras d'ancrage. On peut alors libérer la sonde de la colonne en faisant reculer celle-ci et procéder à la réception des ondes émises en surface.

On connait des systèmes d'émission-réception où les moyens d'émission sont aussi descendus dans un puits. Les moyens d'émission et les moyens de réception peuvent être contenus dans un même outil de puits ou dans des outils différents suspendus les uns au-dessous des autres.

Un espacement important entre les émetteurs et les récepteurs peut être obtenu sans trop de difficulté dans les puits ou portions de puits verticaux en allongeant les câbles reliant la sonde ou l'outil principal aux satellites suspendus au-dessous. Un système convenant pour les puits sensiblement verticaux est décrit par exemple dans le brevet français No. 2 616 230.

Cependant, un tel dispositif d'émission-réception d'ondes acoustiques à sondes multiples très espacées, devient tout à fait inopérant dans les cas où la progression par gravité ne peut s'effectuer normalement du fait de forces de frottement excessives, comme cela se produit dans des zones de puits de section restreinte ou bien trop inclinées par rapport à la verticale.

Par EP-A-391 809, on connait une méthode de prospection sismique dans des puits déviés au moyen d'un ensemble d'émission-réception d'ondes acoustiques déplaçable par rapport à la partie terminale inférieure d'une colonne tubulaire descendue dans un puits. L'ensemble d'émission-réception comporte une sonde réceptrice à bras d'ancrage escamotables disposée au bas de la colonne et reliée à un équipage mobile déplaçable à l'intérieur de celle-ci. Il comporte aussi une source acoustique intercalée sur la colonne. La source peut être fixe par rapport à la colonne ou déplaçable par rapport à celle-ci au moyen de l'équipage mobile. La paroi de la colonne est pourvue d'ouvertures latérales permettant l'émission d'ondes acoustiques vers les formations environnant le puits. Un câble multi-fonctions muni d'une prise femelle enfichable en milieu liquide, permet une connexion différée de l'ensemble d'émission-réception à une installation de commande et d'enregistrement en surface. Le système est rendu opératoire en ancrant la sonde et en l'écartant de l'extrémité inférieure de la colonne.

Ce système antérieur convient bien pour des opérations de prospection utilisant des sources logeables à l'intérieur des colonnes tubulaires relativement étroites qui sont généralement employées dans les forages. Comme sources, on peut utiliser par exemple des étinceleurs ou sparkers.

En outre, la source étant intercalée sur la colonne tubulaire, émet son énergie au travers de fentes dans la paroi. Une partie de l'énergie émise a tendance à se transmettre le long de la colonne. On doit interposer de ce fait des moyens d'absorption dans la portion de tube entre la source et la sonde réceptrice, pour éviter les transmissions directes aux capteurs.

On sait aussi que dans le domaine de la prospection par ondes acoustiques ou sismiques, il existe de nombreuses méthodes de traitement permettant de rendre plus lisibles les coupes du sous-sol obtenues à partir des signaux captés et enregistrés, par combinaison d'enregistrements de signaux captés en plusieurs emplacements de réception différents espacés les uns des autres le long du puits. Ceci n'est pas possible avec les systèmes à sonde de réception unique que l'on emploie actuellement du fait des difficultés de manoeuvre dans les puits déviés.

Le système de guidage selon l'invention permet de conduire dans un puits où sa progression par gravité est gênée et notamment dans un puits dévié, un dispositif d'exploration non rigide comportant des moyens d'émission de signaux dans les formations environnant le puits et des moyens de réception de signaux.

Le système comporte une colonne tubulaire, un ensemble mobile comprenant une première sonde pourvue de moyens d'ancrage contre la paroi du puits et au moins une deuxième sonde réunie à la première par une portion de câble porteur multi-fonctions, et des moyens de Liaison pour la connexion de l'ensemble mobile à un laboratoire de commande et d'enregistrement.

Il est caractérisé en ce que le dispositif d'exploration est réparti dans lesdites sondes et la colonne tubulaire est conformée de façon que l'ensemble mobile soit déplaçable par rapport à elle d'une position de retrait où la totalité de l'ensemble mobile est à l'intérieur de la colonne tubulaire et une position de travail où lesdites sondes sont toutes à l'extérieur de la colonne tubulaire, le système comportant des moyens de pompage pour appliquer par intermittence à l'ensemble mobile en position de retrait, une pression de fluide de façon à pousser la première sonde hors de la colonne tubulaire.

La colonne tubulaire comporte par exemple un train de tiges et une partie terminale de section supérieure à celle du train de tiges, pour contenir l'ensemble mobile en position de retrait.

Cette colonne tubulaire peut comporter aussi un train de tiges de section suffisante pour contenir la deuxième sonde ou chacune d'elles en position de retrait et une partie terminale rapportée de section supérieure à celle du train de tiges, pour contenir la première sonde en position de retrait.

Les moyens d'émission sont disposés par exemple en tête de l'ensemble de sondes ou bien encore dans la première sonde. Celle-ci comporte par exemple un corps rigide renfermant les moyens d'ancrage et une gaine souple renfermant des moyens capteurs et reliée à ladite deuxième sonde.

Suivant un mode de réalisation,le système de guidage comporte un ensemble de guidage déplaçable à l'intérieur de la colonne tubulaire et relié au câble porteur multi-fonctions de l'ensemble mobile, ainsi que des moyens de verrouillage de l'élément de guidage pour immobiliser celui-ci par rapport à la colonne tubulaire en position de retrait de l'ensemble mobile.

Il peut comporter en outre des moyens de connexion différée de l'ensemble des sondes au câble multi-fonctions de connexion. Ces moyens comportent par exemple un connecteur femelle terminant le câble porteur multi-fonctions. Ce connecteur étant enfichable en milieu liquide sur un connecteur mâle porté par l'élément de guidage et relié électriquement à l'ensemble des sondes.

L'ensemble mobile peut être relié directement au Laboratoire de commande et d'enregistrement par un câble multi-fonctions de connexion et il est pourvu d'un support, la colonne tubulaire étant pourvue d'un raccord à fenêtre latérale pour le passage dudit câble de connexion et d'une restriction de section servant de butée pour ledit support, de manière à retenir l'ensemble mobile en position d'extraction.

Suivant un mode de réalisation le système comporte plusieurs sondes espacées le long d'un câble porteur multi-fonctions et contenant les moyens de réception des ondes.

Suivant un autre mode de réalisation les sondes contiennent les moyens de réception de signaux et les moyens d'émission de signaux sont disposés en surface.

Le dispositif d'exploration peut comporter des moyens d'émission et de réception de signaux de type acoustique, électrique, électromagnétique etc.

La méthode selon l'invention comporte :
- la fixation du dispositif d'exploration derrière un organe d'ancrage,
- l'introduction dans le puits de l'organe d'ancrage avec le dispositif d'exploration associé et d'une portion de colonne tubulaire,
- le déplacement du dispositif d'exploration le long du puits par allongement de la colonne tubulaire au moyen de sections de colonne successivementajoutées, jusqu'a ce que ladite portion tubulaire atteigne une position déterminée dans le puits,
- la poussée de l'organe d'ancrage hors de la portion tubulaire par poussée de fluide et son ancrage dans le puits, et
- le retrait de la colonne tubulaire par une traction exercée sur elle depuis la surface, sur une longueur au moins égale à celle du dispositif d'exploration, de manière à dégager complètement celui-ci.

D'autres caractéristiques et avantages du système selon l'invention apparaîtront mieux à la lecture de la description ci-après de modes de réalisation décrits à titre d'exemples non limitatifs, en se référant aux dessins annexés où :
- la Fig.1 montre une première variante du premier mode de réalisation du système de guidage où l'ensemble mobile est à l'intérieur d'une colonne tubulaire servant à l'acheminer vers une zone d'intervention au fond d'un puits dévié;
- la fig.2 montre le système d'émission-réception de la Fig.1 ou l'ensemble mobile est conduit, dans une position rétractée vers une zone d'opérations dans un puits;
- la Fig.3 est une vue analogue à la Fig.2 qui montre la mise en place du dispositif de connexion électrique différée de l'ensemble déplaçable du système d'émission-réception avec un laboratoire de commande et d'enregistrement en surface;
- la Fig.4 montre le système d'émission-réception de la Fig.1 où l'ensemble mobile est au début de sa phase d'extraction hors de la colonne tubulaire d'acheminement;
- la Fig.5 montre la phase terminale d'extraction de l'ensemble mobile de la Fig.1;
- la Fig.6 montre une deuxième variante du premier mode de réalisation du système de guidage où l'ensemble mobile est contenu tout entier, en postion de retrait, dans un élément tubulaire de section plus grande que la colonne tubulaire et rapporté à l'extrémité de celle-ci;

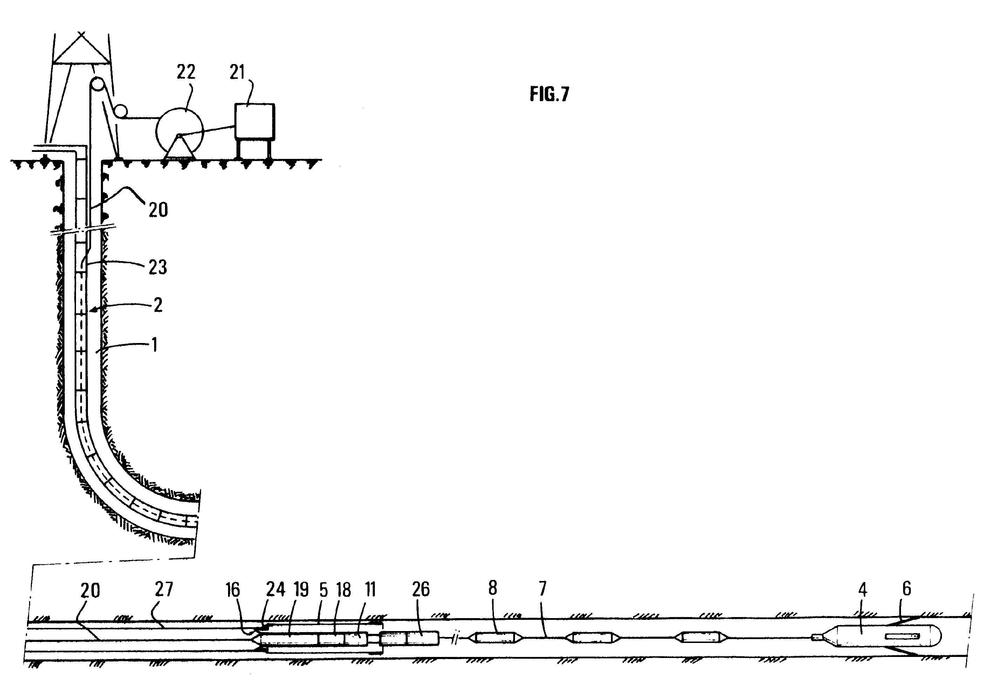

- la Fig.7 montre la variante de réalisation précédente avec l'ensemble mobile en position d'extraction hors de l'élément tubulaire rapporté;
- la Fig.8 montre une autre variante du premier mode de réalisation du système de guidage où l'ensemble déplaçable est adapté à être pompé jusqu'à l'extrémité de la colonne tubulaire;
- la Fig.9 montre la même variante de réalisation en position d'extraction de l'ensemble mobile; et
- la Fig. 10 montre un autre mode de réalisation du système où la partie souple de l'ensemble mobile est une gaine allongée contenant des transducteurs.

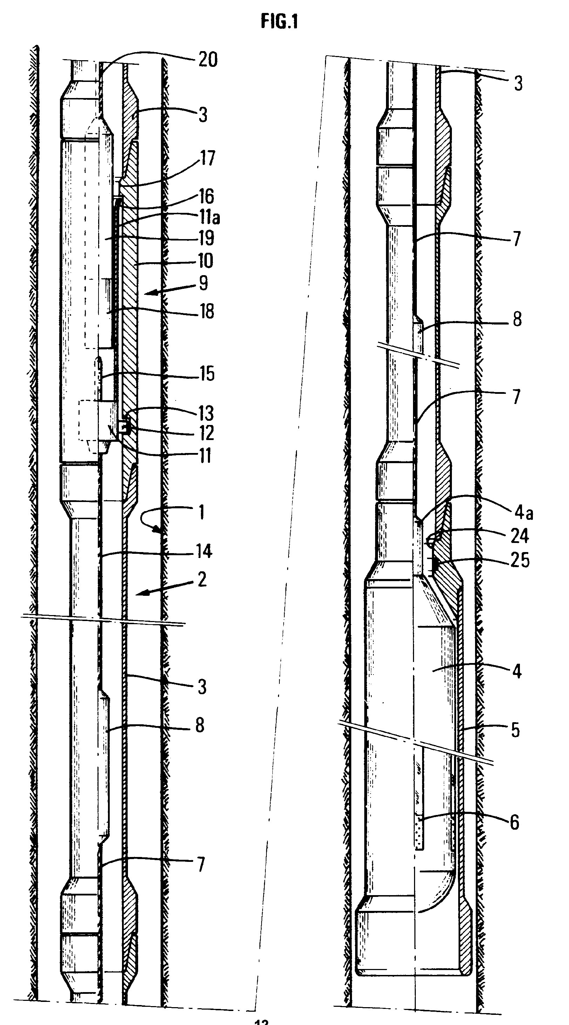

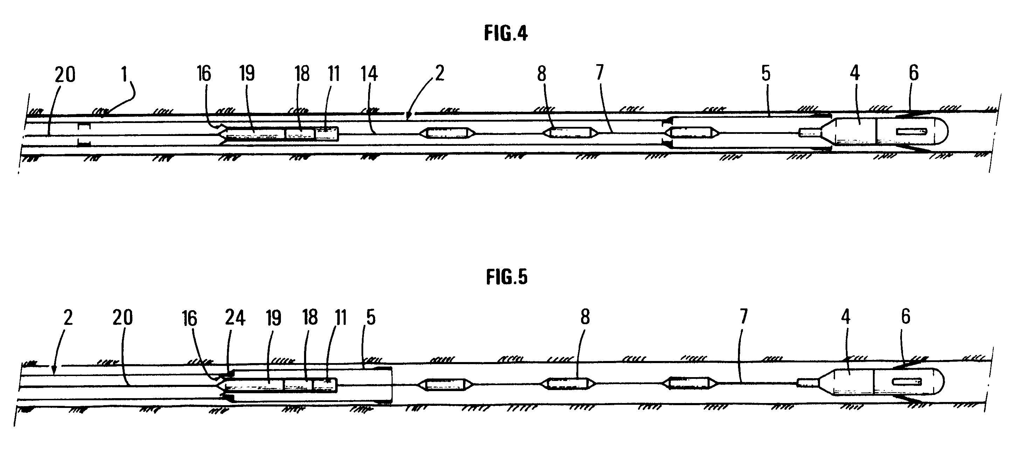

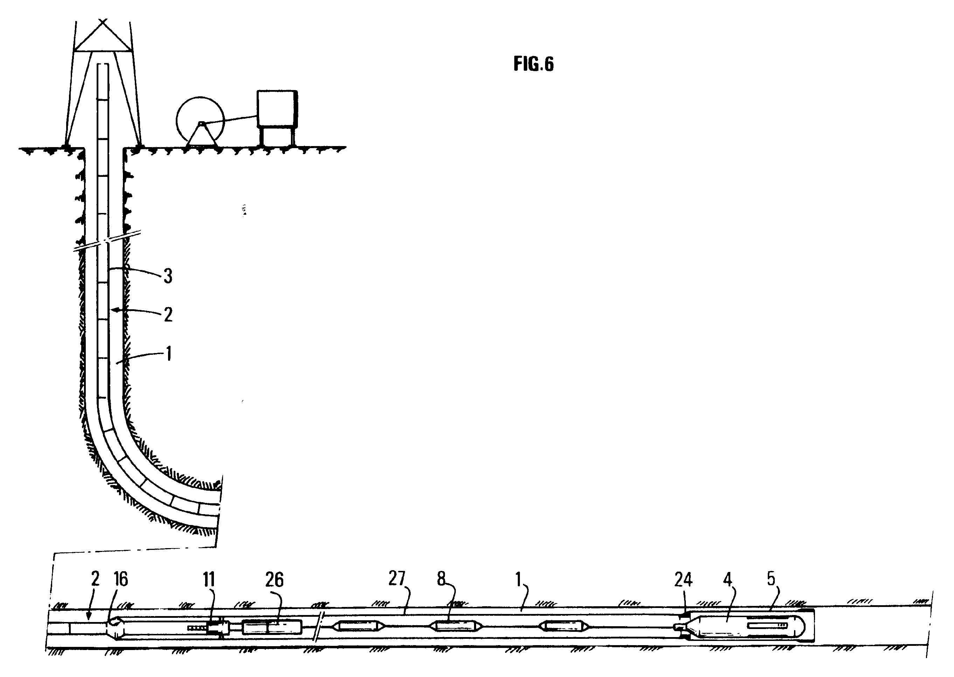

Le système de guidage représenté à la Fig.1, convient pour conduire dans un puits, un dispositif d'exploration multi-sondes. Il comporte une colonne tubulaire de guidage 2 constituée par exemple un train de tiges de forage 3 interconnectées. Le système comporte un ensemble mobile (ensemble déplaçable) par rapport à la colonne tubulaire 2 entre une position de retrait représentée à la Fig.1 et une position d'extraction, représentée par exemple sur la Fig.5. Cet ensemble déplaçable comporte une première sonde 4 de section supérieure à la section intérieure des tiges de la colonne 2. Pour protéger cette première sonde durant les manoeuvres de descente, un carter 5 pouvant loger la première sonde, est rapporté à l'extrémité inférieure de la colonne tubulaire. La première sonde 4 est pourvue de bras d'ancrage 6 pouvant pivoter entre une position repliée le long du corps (Fig. 1) et une position d'ancrage contre les parois du puits (Fig 4 ou 5). Les bras 6 sont mus par des moyens de commande électro-hydrauliques du type décrit par exemple dans le brevet français FR 2 501 380. La première sonde 4 peut contenir par exemple une source de puits d'un type connu telle qu'une source vibratoire ou une source impulsionnelle. La première sonde peut également contenir, selon les cas, des capteurs d'ondes acoustiques ou sismiques.

La première sonde 4 est reliée par un câble électro-porteur 7 à au moins une deuxième sonde 8 de section plus étroite inférieure à celle des tiges 3 de la colonne tubulaire 2, qui peut coulisser librement à l'intérieur de celle-ci. De préférence, l'ensemble déplaçable comporte un chapelet de sondes constitué d'une série de sondes plus étroites 8 disposées à distance les unes des autres le long du câble électro-porteur 7, terminée par la sonde plus volumineuse 4 qui trouve sa place à l'extrémité inférieure de la colonne tubulaire, dans le carter rapporté 5.

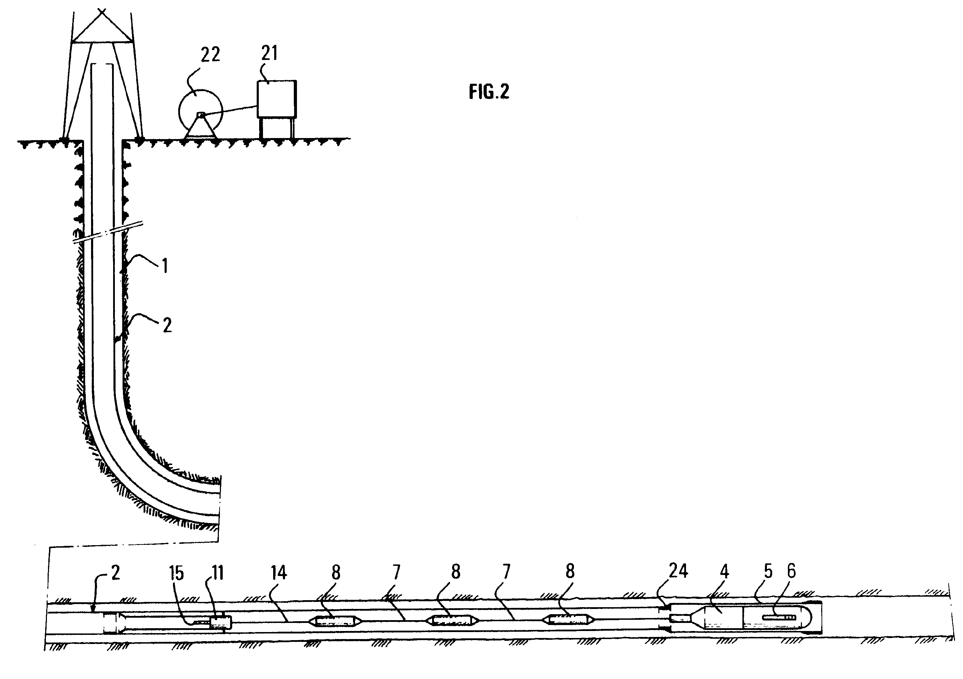

Le chapelet de sondes (8, 4) est relié à un bloc de guidage 9 analogue à ceux qui ont été déjà décrits dans les demandes de brevet FR 2 609 105 ou EN. 89/04.554. Ce bloc 9 est intercalé entre deux tiges 3 de la colonne 2 et comporte un corps tubulaire 10 de section intérieure sensiblement égale à celle des tiges 3 et un élément de guidage déplaçable 11. Des moyens de verrouillage télécommandables bloquent l'élément de guidage 11 en position de retrait du chapelet de sondes. Ils peuvent être constitués par exemple de verrous 12 à commande électrique ou électro-hydraulique, qui peuvent venir s'engager dans des rainures 13 du corps tubulaire 10. Un élément de câble électro-porteur 14 relie l'élément de guidage 11 à la première sonde plus étroite 8. Du côté opposé à celle-ci, l'élément de guidage 11 comporte une fiche mâle multi-contacts 15 orientée suivant l'axe du corps 10 et un prolongement tubulaire 11A de section inférieure à celle du corps 10 et prolongé par une collerette 16. Un épaulement intérieur 17 du corps sert de butée haute à la collerette 16 et limite le retrait de l'ensemble déplaçable à l'intérieur de la colonne tubulaire. La collerette 16 et le prolongement tubulaire 11A servent à guider une prise femelle 18 vers la fiche mâle 15. La prise 18 est surmontée d'une barre de lestage tubulaire 19 de section sensiblement égale. Elle est connectée électriquement à un câble multi-conducteurs 20 qui la relie à un laboratoire de commande et d'enregistrement en surface 21 (Fig. 2). Des moyens de blocage analogues aux verrous 12 et non représentés, permettent le blocage de la fiche mâle 15 en position d'engagement. Des exemples de connecteurs électriques multi-contacts, sont décrits dans le brevet US 4 500 155. Des ouvertures (non représentées) dans la collerette 16 et au travers l'élément de guidage 11 permettent d'établir un courant de fluide propulseur tout le long de la de la colonne tubulaire 2 jusqu'au carter terminal 5. La section intérieure de celui-ci est choisie de manière qu'un courant de fluide de forage puisse pousser la sonde 4 au dehors quel que soit la déviation du puits où l'ensemble de sondes est descendu.

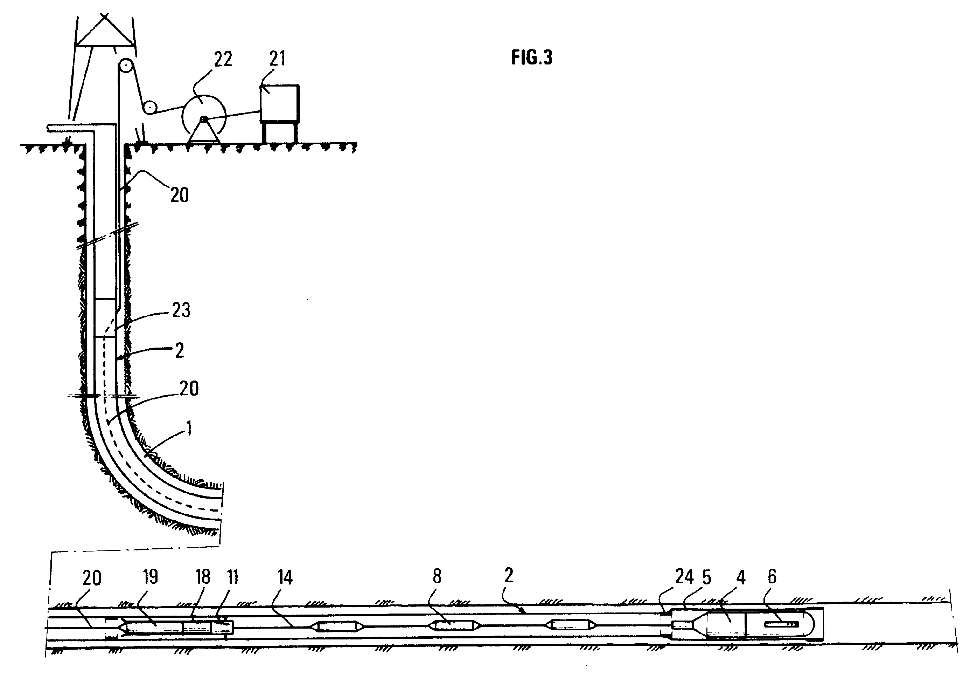

Le système comporte des moyens de raccordement différé de la prise 18 à la fiche 15, déjà décrits dans le brevet FR 2 547 861. Le câble 20 déroulé d'un touret 22 (Fig. 3 par exemple) est introduit à l'intérieur de la colonne tubulaire 2 par un raccord spécial à fenêtre latérale 23 connu des spécialistes sous le nom de "side entry sub". Par un courant de fluide, on propulse la prise 18 jusqu'à son engagement sur la fiche mâle 15.

Dans sa partie terminale de raccordement avec la colonne tubulaire 2, le carter 5 comporte un épaulement 24 de section inférieure à celle de l'élément de guidage 11 auquel on incorpore une bague aimantée 25 (fig. 1). Un capteur électro-magnétique connecté aux câbles multi-conducteurs 7, 14, 20 et non représenté, est disposé dans la tête 4A de la sonde 4 et permet de détecter la sortie de celle-ci hors du carter 5 (position haute de l'ensemble mobile). Un autre capteur peut également être inclus dans l'élément de guidage 11 pour la détection de la position d'extraction ou position basse de l'ensemble mobile, comme on le verra la description suivante de la mise en place du système.

Le système de guidage est mis en place de la manière suivante:

Le dispositif d'émission-réception (4, 8) est descendu dans le puits suspendu au câble 7. On introduit ensuite le carter 5 et l'on fixe au câble 7 l'élément de guidage 11. Celui-ci reposant sur la butée basse 24, on complète la partie basse où l'ensemble mobile doit rentrer en position de retrait, en ajoutant des tiges et le bloc de guidage 9.

Par connexions successives de nouvelles tiges 3, on amène l'ensemble déplaçable jusque dans la zone de puits déviée où des opérations de prospection sont prévues (Fig. 2).

Un raccord spécial à fenêtre 23 (Fig. 3) est ajouté à la colonne ainsi formée. Le câble multi-conducteurs 20 déroulé du touret 22, est introduit à l'intérieur de la colonne 2 que l'on connecte alors à des moyens de pompage (non représentés) capables d'établir un courant de fluide et de pousser la barre de lestage 19 et la prise 18 jusqu'à la fiche 15 de l'élément de guidage 11 et verrouiller celle-ci en position d'engagement (Fig. 3).

Quand la connexion électrique est établie on tire sur le cable depuis la surface pour déplacer l'ensemble mobile vers sa position de retrait où l'élément de guidage 11 rentre dans le bloc 9 et où l'on peut le verrouiller.

On pousse alors la colonne 2 jusqu'à la position de départ où des enregistrements doivent avoir lieu.

On connecte de nouveau la colonne tubulaire aux moyens de pompage de manière à pousser la première sonde 4 hors de son carter de protection 5 et à libérer les bras d'ancrage (fig. 4). Le capteur électro-magnétique inclus dans la tête 4A de la sonde 4 détecte sa sortie.

On télécommande depuis la surface, l'ouverture des bras 6 qui viennent s'ancrer dans les parois du puits 1 (Fig. 4) et immobiliser la sonde 4.

La sonde 4 étant ancrée, on exerce une traction sur la colonne tubulaire 2 depuis l'installation de surface pour faire reculer son extrémité basse et, par là, extraire complètement l'ensemble des sondes (Fig. 5). La collerette de l'élément de guidage 11 vient alors en butée contre l'épaulement 24 à l'extrémité inférieure de la colonne tubulaire 2. Le capteur électro-magnétique inclus dans l'élément de guidage, détecte la bague aimantée 25 (Fig. 1).

On peut, alors procéder à des cycles d'émission-réception de signaux.

Suivant un premier mode d'utilisation, la première sonde 4, du fait de sa section relativement importante, peut contenir une source sismique de puits plus volumineuse. On y installe par exemple un vibrateur d'un type quelconque et notamment un vibrateur réalisé à partir de transducteurs piézo-électriques ou magnétostrictifs, ou bien encore éventuellement une source impulsionnelle. On peut choisir par exemple une source de puits émettant dans la gamme de fréquence 1 à 2 KHz et commandée pour émettre des vibrations de fréquence glissante. Les sondes secondaires 8 contiennent des capteurs adaptés. Comme le système est adapté à fonctionner dans des portions de puits peu inclinées sur l'horizontale, les sondes secondaires 8 reposent sur la paroi du puits, ce qui assure un certain couplage mécanique avec les formations environnantes.

Pour améliorer le couplage avec les parois du puits, on peut utiliser des sondes secondaires 8 pourvues aussi d'un bras d'ancrage et de moyens moteurs appropriés télécommandables aussi depuis l'installation de surface. On dispose par exemple dans chaque sonde secondaire au moins un récepteur tri-axial orientable (accéléromètre ou géophone ou les deux) associé à un détecteur d'orientation, analogue à ceux décrits dans la demande de brevet précitée EN. 89/04.554, et éventuellement un hydrophone. Avec un tel équipement, on peut réaliser par exemple une étude locale des terrains dans un rayon de quelques mètres à quelques centaines de mètres autour d'un puits selon la fréquence d'émission pour repérer la position de réflecteurs, celle toit ou de la base d'un réservoir traversé par le puits, des anomalies géologiques etc.

L'ensemble de sondes étant en position d'extraction, on peut le déplacer depuis sa position de départ sur la portion de puits à étudier et effectuer des cycles d'émission de réception et d'enregistrement. Le déplacement peut être continu ou discontinu. Il est réalisé en exerçant une traction conjointe sur la colonne 2 et sur le câble multi-fonctions 20. Quand les déplacements sont discontinus, on relâche légèrement la traction sur la colonne, de façon à la faire redescendre et ainsi détendre les portions de câble (7, 14) reliant entre elles les différentes sondes. On évite ainsi la propagation directe d'énergie acoustique le long de câbles vers les récepteurs.

Un autre mode d'utilisation possible consiste à réaliser des opérations de prospection sismique au moyen d'une source sismique disposée en surface et de récepteurs disposés dans les différentes sondes 4, 8.

Il est possible aussi de combiner les deux modes en disposant une source dans l'ensemble mobile et une autre en surface, de manière à réaliser deux ensembles d'enregistrement différents au cours de la même remontée.

Suivant une seconde variante du premier mode de réalisation (fig. 6), l'ensemble déplaçable comporte un ensemble ou chapelet de sondes, toutes ou au moins deux au moins d'entre elles ayant une section supérieure à celle de la colonne tubulaire 2. L'une d'entre elles est la première sonde 4. L'autre sonde, 26, est disposée par exemple à l'autre extrémité du chapelet de sondes et contient une source d'ondes acoustiques ou sismiques. A l'extrémité inférieure de la colonne tubulaire 2, est fixé un carter de protection 27 de section et de de longueur suffisantes pour contenir l'ensemble des sondes 4, 26 et les sondes 8 intercalées en position de retrait de l'ensemble mobile. La longueur de ce carter de protection est de l'ordre de quelques dizaines de mètres par exemple. Suivant les cas, sa section peut être intermédiaire entre celle du carter 5 et celle de la colonne tubulaire (Fig. 6) ou bien être égale à celle du carter 5.

Suivant un mode d'utilisation préféré, la source acoustique ou sismique peut être logée dans la première sonde 4. De cette manière, en ramenant l'ensemble des sondes vers sa position de retrait relativement à la colonne tubulaire immobile dans le puits, peut effectuer des cycles d'émission-réception jusqu'à la rentrée qui intervient en dernier, de la sonde 4 contenant la source dans le carter de protection 27. De préférence, la source est disposée dans la première sonde 4, vers l'extrémité de celle-ci la plus éloignée des autres sondes, ce qui facilite son rayonnement. Dans la seconde variante de réalisation également, l'ensemble des sondes est associé à un élément de guidage 11 pourvu de moyens de connexion différée pour un câble multi-fonctions 20 muni de la prise 18. Comme le mode de réalisation précédent, celui-ci se prête aussi à des opérations de prospection sismique avec une source en surface, les sondes 4 à 26 ne contenant que des récepteurs d'ondes.

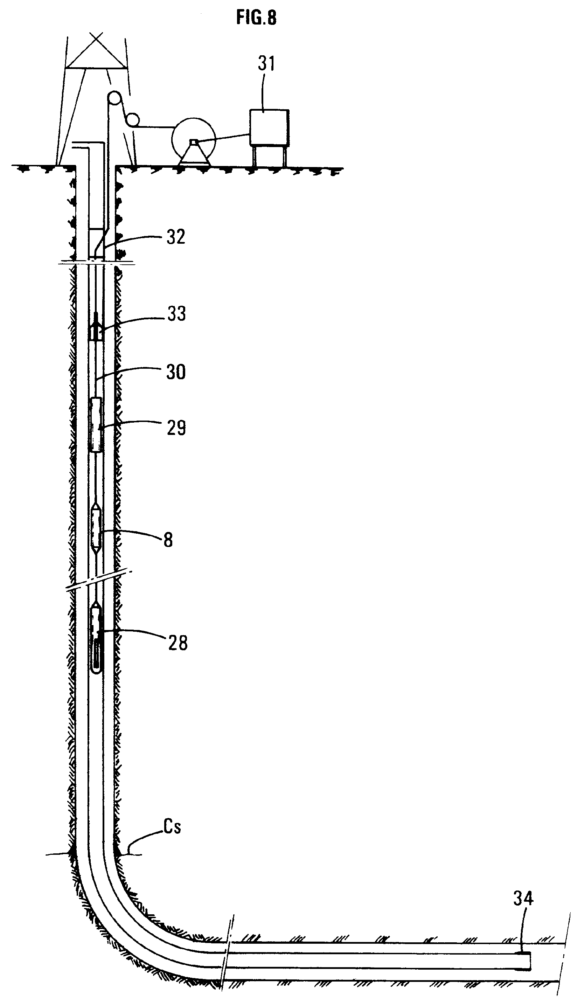

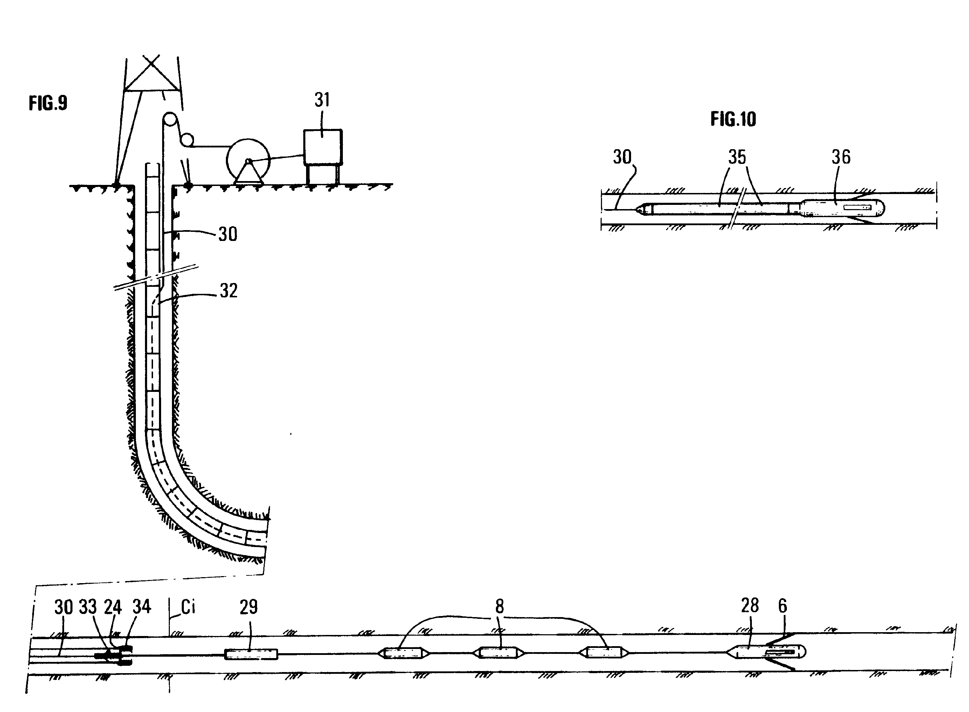

Suivant une autre variante de réalisation (fig. 8, 9), on utilise un chapelet de sondes de section sensiblement identiques, pouvant toutes se déplacer à l'intérieur d'une colonne tubulaire du type colonne de forage. La première que l'on engage dans la colonne est une sonde 28 à bras d'ancrage escamotables. Dans la sonde 29 à l'autre extrémité de l'ensemble de sondes, on incorpore un émetteur d'ondes de type quelconque susceptible d'être descendu dans la colonne, un étinceleur ou sparker par exemple. Toutes les sondes sont connectées à un même câble multi-fonctions 30 qui les relie à un laboratoire de commande et d'enregistrement 31. Le câble 30 pénètre dans la colonne par un raccord à fenêtre latérale 32. A la suite de la sonde 29, on installe sur le câble un élément d'arrêt 33. La colonne 2 est pourvue à son extrémité la plus profonde d'une butée 34 serrée autour du câble contre laquelle vient se bloquer l'élément 33 en position d'extraction de l'ensemble des sondes.

Comme les variantes de réalisation précédents, le système comporte une bague aimantée incluse dans la butée 34 et des capteurs électro-magnétiques (non représentés) sont inclus dans la tête de la sonde 27 et dans la sonde 29, pour détecter la sortie de l'une et le contact de l'autre contre la butée 34 en fin de la course d'extraction du chapelet de sondes.

On utilise selon les cas une source piézo-électrique, magnétostricive ou un sparker capable d'émettre des ondes dans la bande de fréquence entre 1 et 2 KHz et les récepteurs (géophones ou accéléromètres) sont mis au contact des formations géologiques par application des sondes réceptrices contre la paroi sous l'effet de leur propre poids dans les portions de puits horizontales ou éventuellement par ouverture de bras escamotables analogues à ceux de la sonde 27 par exemple.

Ce système fonctionne de la manière suivante:

Par adjonction de tiges, on forme et on descend dans le puits une partie de colonne assez longue pour atteindre la limite supérieure Cs de la zone à explorer (Fig 8).

On introduit l'ensemble de sondes dans la partie de colonne ainsi constituée avec son câble 30. On le fait passer à l'extérieur de la colonne 2 par le raccord à fenêtre 32. La colonne est allongée jusqu'à ce que son extrémité inférieure atteigne la limite inférieure Ci de la zone d'enregistrement (Fig. 9).

On établit alors un courant de fluide dans la colonne 2 pour propulser l'ensemble de sondes jusqu'en bas et faire sortir la sonde de tête 28 à l'extérieur.

La sonde 28 étant ancrée dans le puits par ouverture de ses bras d'ancrage (fig. 9), on exerce une traction sur le train de tiges depuis l'installation de surface, de manière à faire sortir hors de la colonne 2, le chapelet de sondes et amener l'élément d'arrêt 33 en appui contre la butée 34. On referme alors les bras d'ancrage.

En exerçant une tension mécanique constante, on remonte la colonne et le câble à la même vitesse vers la surface. Selon le type de récepteurs utilisé, on peut faire des diagraphies en continu sur toutes les portions de puits successives dépendant de la hauteur du mât de manoeuvre en surface ou bien encore de façon discontinue dans des intervalles de temps d'interruption de la progression. On peut encore réaliser des cycles d'émission-réception sismique durant des arrêts successifs de la remontée.

Dans les variantes de réalisation précédentes, la position d'extraction de l'ensemble mobile est marquée par une butée basse à l'extrémité inférieure de la colonne tubulaire. On ne sortirait cependant pas du cadre de l'invention en supprimant cette butée basse, de manière à pouvoir, après connexion différée du câble multi-conducteurs, faire sortir l'ensemble mobile hors de la colonne tubulaire et remonter celle-ci après ancrage de la sonde 4 jusqu'à ce que le raccord à fenêtre 23 revienne au voisinage de la surface. Dans ce cas, on peut réaliser par exemple des diagraphies en continu sur une très grande longueur du puits, après avoir refermé les bras d'ancrage 27, en exerçant une traction sur le câble sans déplacer la colonne tubulaire 4.

Suivant un autre mode de réalisation du système (Fig. 10) la partie souple de l'ensemble mobile est constituée d'une gaine allongée déformable 35 renfermant des capteurs. A une première extrémité, cette gaine est raccordée au câble multi-conducteurs 30 soit directement, soit par l'intermédiaire d'un dispositif de connexion différée tel que le dispositif (11, 15) décrit précédemment. A son extrémité opposée la gaine 35 est reliée à un organe d'ancrage tel qu'une sonde à bras mobile 36 analogue à la sonde 4 précédente.

Le système selon l'invention a été décrit en relation avec un dispositif d'exploration à signaux acoustiques ou sismiques. Il est évident toutefois qu'il pourrait être utilisé aussi bien pour conduire le long d'un puits un dispositif d'exploration de n'importe quel type électrique, électromagnétique, nucléaire etc.

## Revendications

1. Système de guidage pour conduire dans un puits où sa progression par gravité est gênée et notamment dans un puits dévié, un dispositif d'exploration non rigide comportant des moyens d'émission de signaux dans les formations environnant le puits et des moyens de réception de signaux, le système comportant une colonne tubulaire (2), un ensemble mobile comprenant une première sonde (4,27) pourvue de moyens d'ancrage (6) contre la paroi du puits et au moins une deuxième sonde (8, 26, 29) réunie à la première par une portion de câble porteur multi-fonctions, et des moyens de liaison (30) pour la connexion de l'ensemble mobile à un laboratoire de commande et d'enregistrement (21), caractérisé en ce que le dispositif d'exploration est réparti dans lesdites sondes (4,27,8,26,29) et la colonne tubulaire (2) est conformée de façon que l'ensemble mobile soit déplaçable par rapport à elle d'une position de retrait où la totalité de l'ensemble mobile est à l'intérieur de la colonne tubulaire (2) et une position de travail où lesdites sondes (4,27,8,26,29) sont toutes à l'extérieur de la colonne tubulaire (2), le système comportant des moyens de pompage pour appliquer par intermittence à l'ensemble mobile en position de retrait, une pression de fluide de façon à pousser la première sonde (4,27) hors de la colonne tubulaire (2).

2. Système de guidage selon la revendication 1, caractérisé en ce que la colonne tubulaire (2) comporte un train de tiges et une partie terminale (5, 27) de section supérieure à celle du train de tiges, pour contenir l'ensemble mobile en position de retrait.

3. Système de guidage selon la revendication 1, caractérisé en ce que la colonne tubulaire (2) comporte un train de tiges de section suffisante pour contenir ladite deuxième sonde (8,26,29) ou chacune d'elles en position de retrait et une partie terminale rapportée (5) de section supérieure à celle du train de tiges, pour contenir ladite première sonde (4) en position de retrait.

4. Système de guidage selon l'une des revendications précédentes, caractérisé en ce que les moyens d'émission sont disposés dans la première sonde (4).

5. Système de guidage selon l'une des revendications précédentes, caractérisé en ce que la première sonde (4,27) comporte un corps rigide renfermant les moyens d'ancrage (6) et une gaîne souple (35) renfermant des moyens capteurs et reliée à ladite deuxième sonde.

6. Système de guidage selon l'une des revendications précédentes, caractérisé en ce qu 'il comporte un ensemble de guidage (11) déplaçable à l'intérieur de la colonne tubulaire (2) et relié au câble porteur multi-fonctions (7, 14) de l'ensemble mobile, ainsi que des moyens de verrouillage de l'élément de guidage pour immobiliser celui-ci par rapport à la colonne tubulaire (2) de retrait de l'ensemble mobile.

7. Système de guidage selon la revendication précédente, caractérisé en ce qu'il comporte des moyens de connexion différée (18, 19) de l'ensemble des sondes (4,27,8,26,29) au câble multi-fonctions de connexion (20).

8. Système de guidage selon l'une des revendications 1 à 5, caractérisé en ce que l'ensemble mobile est relié directement au laboratoire de commande et d'enregistrement (21) par un câble multi-fonctions de connexion (30) et il est pourvu d'un support (33), la colonne tubulaire (2) étant pourvue d'un raccord à fenêtre latérale (32) pour le passage dudit câble de connexion (30) et d'une restriction de section (34) servant de butée pour ledit support (33), de manière à retenir l'ensemble mobile en position d'extraction.

9. Système selon la revendication 1, caractérisé en ce qu'il comporte plusieurs sondes (8) espacées le long d'un câble porteur multi-fonctions (7) et contenant les moyens de réception des ondes.

10. Système selon la revendication 1 ou 8, caractérisé en ce que les moyens d'émission de signaux sont disposés en tête de l'ensemble des sondes.

11. Système selon la revendication 7, caractérisé en ce que le câble porteur multi-fonctions (7) est terminé par un connecteur femelle (18) enfichable en milieu liquide sur un connecteur mâle (15) porté par l'élément de guidage (11), et relié électriquement à l'ensemble des sondes.

12. Système selon la revendication 9, caractérisé en ce que lesdites sondes contiennent les moyens de réception de signaux, les moyens d'émission de signaux étant disposés en surface.

13. Système selon la revendication 1, caractérisé en ce que le dispositif d'exploration comporte des moyens d'émission et de réception de signaux acoustiques.

14. Système selon la revendication 1, caractérisé en ce que le dispositif d'exploration comporte des moyens d'émission et de réception de signaux électriques.

15. Système selon la revendication 1, caractérisé en ce que le dispositif d'exploration comporte des moyens d'émission-réception de signaux électromagnétiques.

16. Méthode pour conduire dans un puits où sa progression par gravité est gênée et notamment dans un puits dévié, un ensemble mobile comprenant une première sonde (4, 27) pourvue de moyens d'ancrage contre la paroi du puits et au moins une deuxième sonde (8, 26, 29) réunie à la première par une portion de câble porteur multi-fonctions (7), et des moyens de liaison pour la connexion de l'ensemble mobile à un laboratoire non rigide comportant des moyens d'émission de signaux dans les formations environnant le puits et les moyens de réception de signaux, caractérisée en ce qu'elle comporte :
- la fixation du dispositif d'exploration derrière un organe d'ancrage (6),
- l'introduction dans le puits de L'organe d'ancrage (6) avec le dispositif d'exploration associé et d'une portion de colonne tubulaire (2),
- le déplacement du dispositif d'exploration le long du puits par allongement de la colonne tubulaire au moyen de sections de colonne successivement ajoutées, jusqu'à ce que ladite portion tubulaire atteigne une position déterminée dans le puits,
- la poussée de l'organe d'ancrage (6) hors de la portion tubulaire par poussée de fluide et son ancrage dans le puits, et
- le retrait de la colonne (2) tubulaire par une traction exercée sur elle depuis la surface, sur une Longueur au moins égale à celle du dispositif d'exploration, de manière à dégager complètement celui-ci.

## Patentansprüche

1. Führungssystem, um in einem Bohrloch, wo ihr Fortschritt durch Schwerkraft gestört ist, und insbesondere in einem abgelenkten Bohrloch, eine nicht-steife Explorationsvorrichtung zu führen bzw. zu betreiben, welche Mittel zum Aussenden von Signalen in die das Bohrloch umgebenden Formationen sowie Mittel zum Empfang von Signalen umfasst, wobei das System eine röhrenförmige Kolonne (2), eine bewegliche Anordnung eine erste Sonde (4, 27) aufweisend, die mit Mitteln zum Verankern (6) gegen die Wandung des Bohrlochs und wenigstens eine zweite Sonde (8, 26, 29) versehen ist, die mit der ersten über einen Teil eines Mehrfunktionsträgerkabels vereinigt ist sowie Bindungsmittel (30) zur Verbindung der beweglichen Anordnung mit einem Steuer- und Aufzeichnungslabor (21) umfasst, dadurch gekennzeichnet, daß die Explorationsvorrichtung in diesen Sonden (4, 27, 8, 26, 29) verteilt ist und die röhrenförmige Kolonne (2) derart ausgestaltet ist, daß die bewegliche Anordnung bezüglich ihrer aus einer zurückgezogenen Stellung, wo die Gesamtheit der beweglichen Anordnung sich im Innern der röhrenförmigen Kolcnne (2) befindet, und einer Arbeitsstellung beweglich ist, wo diese Sonden (4, 27, 8, 26, 29) sämtlich außerhalb der röhrenförmigen Kolonne (2) sich befinden, wobei das System Pumpmittel umfasst, um intermittierend an die bewegliche Anordnung in zurückgezogener Stellung einen Fluiddruck derart anzulegen, daß die erste Sonde (4, 27) aus der röhrenförmigen Kolonne geschoben wird.

2. Führungssystem nach Anspruch 1, dadurch gekennzeichnet, daß die röhrenförmige Kolonne (2) einen Bohrstrang und einen Endteil (5, 27) eines Querschnitts grösser als den des Bohrstrangs umfasst, um die bewegliche Anordnung in zurückgezogenener Stellung zu halten.

3. Führungssystem nach Anspruch 1, dadurch gekennzeichnet, daß die röhrenförmige Kolonne (2) einen Bohrstrang von ausreichendem Querschnitt umfasst, um die zweite Sonde (8, 26, 29) oder jede hiervon in zurückgezogener Stellung zu halten und einen aufgesetzten Endteil (5) von einem Querschnitt aufweist, der grösser als der des Bohrstrangs ist, um diese erste Sonde (4) in zurückgezogener Stellung zu halten.

4. Führungssystem nach einem der vorhergehenden Ansprüche, dadurch gekennzeichnet, daß die Sendeeinrichtungen in der ersten Sonde (4) angeordnet sind.

5. Führungssystem nach einem der vorhergehenden Ansprüche, dadurch gekennzeichnet, daß die erste Sonde (4, 27) einen steifen Körper, der die Verankerungsmittel (6) einschließt sowie eine nachgiebige Hülle (35) umfasst, welche die Empfangsmittel einschliesst und mit dieser zweiten Sonde verbunden ist.

6. Führungssystem nach einem der vorhergehenden Ansprüche, dadurch gekennzeichnet, daß es eine Führungsanordnung (11), die im Innern der röhrenförmigen Kolonne (2) beweglich und mit dem Mehrfunktionsträgerkabel (7, 14) der beweglichen Anordung verbunden ist sowie Verriegelungsmittel für das Führungselement, um dieses bezüglich der röhrenförmigen Kolonne (29) in zurückgezogener Stellung der beweglichen Anordnung unbeweglich zu halten bzw. festzulegen, umfasst.

7. Führungssystem nach dem vorhergehenden Anspruch, dadurch gekennzeichnet, daß es Mittel zur verzögerten Verbindung (18, 19) der Anordnung der Sonden (4, 27, 8, 26, 29) mit dem Mehrleiterverbindungskabel (20) umfasst.

8. Führungssystem nach einem der Ansprüche 1 bis 5, dadurch gekennzeichnet, daß die bewegliche Anordnung direkt mit dem Steuer- und Aufzeichnungslabor (21) über ein Mehrfunktionsverbindungskabel (30) verbunden und mit einem Träger (33) versehen ist, wobei die röhrenförmige Kolonne (2) mit einem Verbinder mit seitlichem Fenster (32) zum Durchgang dieses Verbindungskabels (30) und mit einer Querschnittsverengung (34) versehen ist, die als Anschlag für diesen Träger (33) dient, derart, daß die bewegliche Anordnung in Herausziehstellung zurückgehalten ist.

9. System nach Anspruch 1, dadurch gekennzeichnet, daß es mehrere Sonden (8) aufweist, die längs eines Mehrfunktionsträgerkabels (7) angeordnet sind und die Mittel zum Empfang der Wellen enthält.

10. System nach Anspruch 1 oder 8, dadurch gekennzeichnet, daß die Signalsendemittel am Kopf der Anordnung der Sonden angeordnet sind.

11. System nach Anspruch 7, dadurch gekennzeichnet, daß das Mehrfunktionsträgerkabel (7) in einer Verbinderbuchse (18) endet, die in flüssiger Umgebung auf einen Steckverbinder (15) aufschiebbar ist, der vom Führungselement (11) getragen und elektrisch mit der Anordnung der Sonden verbunden ist.

12. System nach Anspruch 9, dadurch gekennzeichnet, daß diese Sonden die Mittel zum Empfang von Signalen enthalten, wobei die Mittel zum Aussenden von Signalen an der Oberfläche angeordnet sind.

13. System nach Anspruch 1, dadurch gekennzeichnet, daß die Explorationsvorrichtung Mittel zum Aussenden und zum Empfangen akustischer Signale umfasst.

14. System nach Anspruch 1, dadurch gekennzeichnet, daß die Explorationsvorrichtung Mittel zum Aussenden und zum Empfängen elektrischer Signale umfasst.

15. System nach Anspruch 1, dadurch gekennzeichnet, daß die Explorationsvorrichtung Mittel zum Aussenden-Empfangen elektromagnetischer Signale umfasst.

16. Verfahren, um in einem Bohrloch, wo ihr Fortschritt durch Schwerkraft gestört ist, und insbesondere in einem abgelenkten Bohrloch, eine bewegliche Anordnung zu führen bzw. zu betreiben, die eine erste Sonde (4, 27), die mit Mitteln zur Verankerung gegen die Wandung des Bohrlochs versehen ist und wenigstens eine zweite Sonde (8, 26, 29) umfasst, die mit der ersten über ein Mehrfunktionskabelträgerteil (7) verbunden ist und Verbindungsmitteln, um die bewegliche Anordnung mit einem nicht-steifen Labor zu verbinden, das Mittel zum Aussenden von Signalen in die Formationen, die das Bohrloch umgeben und die Mittel zum Empfang von Signalen umfasst, dadurch gekennzeichnet, daß es umfasst:
- die Befestigung der Explorationsvorrichtung hinter einem Verankerungsorgan (6),
- das Einführen in das Bohrloch des Verankerungsorgans (6) mit der zugeordneten Explorationsvorrichtung sowie eines Teils der röhrenförmigen Kolonne (2),
- das Bewegen der Explorationsvorrichtung längs des Bohrlochs durch Längung der röhrenförmigen Kolonne vermittels von Kolonnenabschnitten, die aufeinanderfolgend angesetzt werden, bis dieser genannte röhrenförmige Teil eine bestimmte Position in dem Bohrloch erreicht,
- das Schieben des Verankerungsorgans aus dem röhrenförmigen Teil durch Druck bzw. Schub des Fluids und seine Verankerung im Bohrloch, und
- das Zurückziehen der röhrenförmigen Kolonne (2) durch einen hierauf von der Oberfläche aus ausgeübten Zug über eine Länge, die wenigstens gleich der der Explorationsvorrichtung derart ist, daß diese komplett freigegeben wird.

## Claims

1. A guiding system for moving in a well in which progress by means of gravity is hindered, in particular in an inclined well, a non-rigid exploration device having means for transmitting signals to the formations surrounding the well and means for receiving signals, the system having a tubular column (2), a mobile unit having a first sonde (4, 27) provided with means for anchoring (6) against the wall of the well and at least a second sonde (8, 26, 29) connected back to the first by a section of multi-purpose cable, and connection means (30) for connecting the mobile unit to a control and recording laboratory (21), characterised in that the exploration device is divided between the sondes (4, 27, 8, 26, 29) and the tubular column (2) is configured in such a way that the mobile unit is displaceable in relation to the column from an internal position in which the whole of the mobile unit is inside the tubular column (2) to an operating position in which the sondes (4, 27, 8, 26, 29) are outside the tubular column (2), the system having pumping means to apply a pressurised fluid intermittently to the mobile unit when in the internal position so as to push the first sonde (4, 27) outside the tubular column (2).

2. A guiding system in accordance with claim 1, characterised in that the tubular column (2) has a pipe string and an end part (5, 27) with a section greater than that of the pipe string to contain the mobile unit in the internal position.

3. A guiding system in accordance with claim 1, characterised in that the tubular column (2) has a pipe string with a section large enough to contain the second sonde (8, 26, 29) when each of them is in the internal position and an attached end part (5) with a section greater than that of the pipe string to contain the first sonde (4) in the internal position.

4. A guiding system in accordance with one of the previous claims, characterised in that the transmission means are located in the first sonde (4).

5. A guiding system in accordance with one of the previous claims, characterised in that the first sonde (4, 27) has a rigid body housing the anchoring means (6) and a flexible sheath (35) housing the sensing means and connected to the second sonde.

6. A guiding system in accordance with one of the previous claims, characterised in that it has a guiding unit (11) that is displaceable inside the tubular column (2) and connected to the multi-purpose cable (7, 14) of the mobile unit, as well as means for locking the guiding element so as to immobilise this element in relation to the tubular column (2) when the mobile unit is in the internal position.

7. A guiding system in accordance with the previous claim, characterised in that it has means for providing delayed connection (18, 19) of the set of sondes (4, 27, 8, 26, 29) to the multi-purpose connecting cable (20).

8. A guiding system in accordance with one of claims 1 to 5, characterised in that the mobile unit is directly connected to the control and recording laboratory (21) by a multipurpose connecting cable (30) and in that it is provided with a support (33), the tubular column being fitted with a side entry sub (32) so that the connecting cable (30) and a section restrictor (34) serving as a stop for the support (33) to secure the mobile unit when in the external position may be passed through.

9. A guiding system in accordance with claim 1, characterised in that it has several sondes (8) spaced along the length of a multi-purpose cable (7) and containing wave reception means.

10. A guiding system in accordance with claim 1 or 8, characterised in that the signal transmission means are located at the head of the set of sondes.

11. A guiding system in accordance with claim 7, characterised in that the multipurpose cable has at its end a female socket connector (18) that may be engaged in a liquid medium with a male plug connector (15) borne by the guiding element (11) and electrically connected to the set of sondes.

12. A system in accordance with claim 9, characterised in that the sondes contain signal reception means, the signal transmission means being located at the surface.

13. A system in accordance with claim 1, characterised in that the exploration device has acoustic signal transmission and reception means.

14. A system in accordance with claim 1, characterised in that the exploration device has electric signal transmission and reception means.

15. A system in accordance with claim 1, characterised in that the exploration device has electro-magnetic signal transmission and reception means.

16. A method for moving in a well where progression by gravity is hindered, particularly in an inclined well, a mobile unit having a first sonde (4, 27) fitted with means for anchoring with the wall of the well and at least one second sonde (8, 26, 29) connected back to the first by a section of multi-purpose cable (7) and connection means for connecting the mobile unit to a non-rigid laboratory having means for transmitting signals to the formations surrounding the well and means for receiving signals, characterised in that it consists in:
- securing the exploration device behind an anchoring element (6),
- introducing the anchoring element (6) with the associated exploration device and a section of tubular column into the well,
- moving the exploration device along the well by extending the tubular column by adding successive column sections, until the tubular section reaches a given position in the well,
- pushing the anchoring element (6) outside the tubular section by means of a fluid flow bringing it into the anchoring position in the well, and
- withdrawing the tubular column (2) by exerting traction on it from the surface over a length at least equal to that of the exploration device so as to completely disengage the device.
